# FASCICULE DE BREVET EUROPEEN

(11) **EP 2 286 311 B1**
(45) Date de publication et mention de la délivrance du brevet: **29.02.2012**
(21) Numéro de dépôt: 09761896.1
(22) Date de dépôt: 14.05.2009
(51) Int. Cl.: G05B 19/042, E06B 9/68, E06B 9/322

(54) **PROCEDE DE COMMANDE GROUPEE D'ECRANS MOTORISES**
VERFAHREN ZUR GRUPPIERTEN STEUERUNG MOTORGETRIEBENER SCHIRME
METHOD FOR THE GROUPED CONTROL OF MOTOR-DRIVEN SCREENS

(30) Priorité: 15.05.2008 FR 0853146
(43) Date de publication de la demande: 23.02.2011
(73) Titulaire: Somfy SAS, 74300 Cluses (FR)
(72) Inventeur: GERINIERE, Pierre, F-74300 Cluses (FR); LAPIERRE, Stéphane, F-74700 Sallanches (FR)
(74) Mandataire: Myon, Gérard Jean-Pierre
(86) Numéro de dépôt international: PCT/FR2009/050894
(87) Numéro de publication internationale: WO 2009/150345

(56) Documents cités:
- EP-A- 0 095 108
- EP-A- 0 913 748
- JP-A- 8 210 054
- US-A1- 2005 173 080

## Description

La présente invention concerne un procédé de commande groupée de plusieurs écrans motorisés équipés d'une barre de charge. Ces écrans peuvent être des stores vénitiens ou autres stores analogues. Ce type d'écran comprend au moins un cordon de levage, relié à la barre de charge, s'enroulant autour d'un arbre entraîné en rotation par un actionneur. Les écrans peuvent également être des stores toiles enroulables, voire des volets roulants. Dans tous les cas, il est nécessaire que la mesure de la position de la barre de charge d'un écran soit la plus indépendante possible de la position de l'écran.

Pour piloter plusieurs écrans motorisés, il est connu d'utiliser un automatisme permettant de gérer la position et/ou l'orientation des lames des écrans constitutifs du groupe de manière à ce que chaque écran ait la même position et/ou orientation de lames suite à une commande groupée. Le pilotage est généralement assuré par un fonctionnement de type « maître-esclaves » où un écran, dit « maître », pilote les autres écrans dits « esclaves » du groupe. Les écrans esclaves reproduisent la configuration, c'est à dire, la position et/ou l'orientation des lames de l'écran maître, comme décrit dans la demande JP-A-08210054. Comme le précise EP-A-0913748, l'ajustement de la position et/ou de l'orientation des lames d'un écran peut être obtenu par le calcul d'impulsions moteur ou temporelle au moyen d'un microprocesseur. Une correspondance entre ces impulsions et la position de l'écran ou l'orientation des lames peut être définie directement.

La course d'un écran est déterminée par la distance parcourue par la barre de charge entre une première et une deuxième position prédéterminées. La première position, appelée fin de course haute, correspond généralement à une position de la barre de charge pour laquelle l'écran est complètement ouvert. La barre de charge atteint alors une butée haute. Cette butée haute est une position d'arrêt souhaitée par l'utilisateur. La deuxième position, appelée fin de course basse, correspond à une position de la barre de charge telle que l'écran est complètement fermé. La barre de charge atteint alors une butée basse. Dans les demandes précédentes, tous les écrans ont sensiblement la même course et les mêmes positions de fin de course haute.

La mesure de position de la barre de charge d'un écran est obtenue par rapport à une position de référence prédéterminée. Par ailleurs, il peut être prévu une opération de calibrage permettant de définir une même position de référence pour les écrans du groupe après l'installation. Cette position de référence est décrite comme une position spécifique commune correspondant à toutes les fins de course hautes des écrans du groupe.

Ainsi, lorsqu'un ordre de déplacement des barres de charge vers une position précise souhaitée de la course d'un écran est exécuté, chaque barre de charge des écrans du groupe se déplace vers cette position définie par rapport à la position de référence commune. A la fin de la manoeuvre, toutes les barres de charge se situent à la même position et sont alignées. Cependant, si les barres de charges des écrans du groupe ne sont pas alignées au moment où l'ordre est émis, alors chaque barre de charge se déplace indépendamment des autres barres de charge. Il en résulte une dysharmonie des mouvements des écrans du groupe provenant des variations d'amplitudes de déplacement des barres de charge. Outre l'aspect inesthétique, ce décalage ne permet pas d'avoir rapidement une information sur la synchronisation des écrans et notamment de leurs moyens comptage, ni sur l'état d'occultation des autres écrans du groupe.

Il en est de même lorsqu'une commande groupée d'ouverture ou de fermeture est exécutée pour un groupe d'écrans dont les barres de charge ne sont pas alignées. L'alignement des barres de charges peut être obtenu en position de fin de course, après des déplacements d'amplitudes variables.

L'alignement des barres de charge de volets roulants pendant une manoeuvre est connu de US-A-2005/0173080 qui décrit des moyens de compensation de vitesse de deux écrans de configuration différente afin que leurs barres de charge se déplacent au même niveau lorsqu'ils sont commandés simultanément. Par contre, lorsque ces barres de charge ne sont pas, initialement, au même niveau; le système ne permet pas l'alignement des barres de charge en cours de mouvement.

L'invention propose un procédé de commande groupée de plusieurs écrans palliant les inconvénients précédents.

A cet effet, l'invention concerne un procédé de commande groupée du déplacement vers une position commune des extrémités mobiles des écrans d'un groupe d'écrans motorisés, caractérisé en ce qu'il comprend une étape consistant à déplacer l'extrémité d'un écran dès que cette extrémité devient la plus éloignée de la position commune, suite au déplacement de l'extrémité d'au moins un autre écran en direction de cette position commune.

On entend par « position commune », une position finale à atteindre ou une position intermédiaire par rapport à un ordre de mouvement pour laquelle les extrémités des écrans commandés peuvent être alignées.

Les écrans formant le groupe commandé par le procédé selon l'invention comprennent une extrémité mobile se déplaçant selon une course propre prédéfinie. Les ordres de commande groupée peuvent être un ordre d'ouverture, de fermeture, d'arrêt ou de mouvement vers une position intermédiaire prédéfinie. L'invention est particulièrement adaptée lorsque l'extrémité mobile est une barre de charge d'un écran. Cependant, l'extrémité mobile peut également être un bord latéral d'une lame orientable. Dans ce cas, la course de l'écran comprend également le parcours de cette extrémité pendant la rotation d'une lame autour de son axe de pivotement. L' « ouverture » de l'écran correspond alors à une orientation des lames laissant passer la lumière. Le plan des lames est sensiblement perpendiculaire au plan formant l'ouverture équipée de l'écran. La « fermeture » correspond à une orientation des lames bloquant la lumière. Le plan des lames est alors sensiblement parallèle au plan formant l'ouverture.

De façon avantageuse, lorsque l'extrémité mobile d'un écran s'aligne avec celle d'un ou plusieurs autres écrans du groupe d'écrans, ces écrans sont ensuite déplacés simultanément.

Dans le cas d'un ordre groupé d'ouverture, une première étape du procédé consiste à commander l'ouverture du ou des écrans les plus fermés. Ensuite, dès qu'une des extrémités mobiles d'un de ces écrans synchronisés atteint la position de l'extrémité mobile d'un autre écran du groupe, un ordre d'ouverture est exécuté pour cet autre écran. Cette dernière étape est répétée pour chaque écran du groupe jusqu'à ce que tous les écrans soient en mouvement, qu'un ordre d'arrêt soit émis ou que tous les écrans soient ouverts.

Dans le cas d'un ordre groupé de fermeture, le procédé est analogue. Il comprend une première étape consistant à fermer le ou les écrans les plus ouverts. Puis, dès que l'extrémité mobile d'un écran en mouvement atteint la position de l'extrémité mobile d'un autre écran, un ordre de fermeture est exécuté pour cet autre écran. L'étape se répète pour chaque écran jusqu'à ce que tous les écrans soient en mouvement, qu'un ordre d'arrêt soit émis ou que tous les écrans soient fermés.

Pour un ordre d'aller en position intermédiaire, la logique est la même. Tous les écrans dont l'extrémité mobile est en dessous de la position à atteindre sont commandés comme l'ordre groupé d'ouverture décrit précédemment. Par contre, tous les écrans dont l'extrémité mobile est au-dessus de la position à atteindre sont commandés comme l'ordre groupé de fermeture décrit précédemment. Dès qu'un écran atteint la position intermédiaire, un ordre d'arrêt lui est transmis.

Ainsi commandés, les extrémités mobiles des écrans du groupe se déplacent au même niveau en fin de mouvement d'ouverture ou de fermeture. En conséquence, si un écran n'est pas correctement synchronisé avec les autres écrans, il est rapidement identifié et une opération de resynchronisation peut être déclenchée pour cet écran. La synchronisation d'un écran résulte essentiellement de la synchronisation des moyens de comptage propre à chaque écran.

Un autre avantage de ce type de commande est de mieux maîtriser l'état d'occultation des écrans du groupe. En effet, avec les dispositifs antérieurs, suite à une commande groupée normale de fermeture, un ordre d'arrêt ne donne aucune indication sur les différentes positions des écrans du groupe. Par exemple, si on commande la fermeture d'un groupe d'écrans en se basant sur un écran partiellement fermé alors que les autres écrans sont ouverts, l'arrêt groupé des écrans induit différents niveaux de fermeture. En effet, lorsque l'écran sur lequel on se base est fermé, les autres écrans sont encore partiellement ouverts. Ainsi, une commande d'arrêt groupé dans cette configuration entraîne une disparité de niveau d'occultation, ce qui peut ne pas être souhaitable pour des raisons sécuritaires ou de protection solaire. Avec le procédé selon l'invention, un arrêt intermédiaire donne une indication sur l'état de déploiement de tous les écrans du groupe. Par exemple, sur un ordre de fermeture, ceux-ci sont au moins aussi déployés que l'écran de référence.

Pour un ordre d'aller en position intermédiaire, l'alignement dynamique dépend de la position des différentes extrémités mobiles des écrans. Si les extrémités mobiles sont toutes au-dessus ou en dessous de la position intermédiaire, alors toutes les extrémités mobiles se déplacent au même niveau en fin de mouvement. Si ce n'est pas le cas, il y a deux alignements dynamiques. Les extrémités mobiles situées au-dessus se déplaceront alignées entre elles en fin de mouvement alors que les extrémités mobiles situées en dessous forment un deuxième groupe où elles se déplacent alignées en fin de mouvement.

Selon un autre aspect avantageux de l'invention, le procédé comprend des étapes préalables à celles mentionnées ci-dessus et consistant à :
i)- identifier l'état d'ouverture des écrans du groupe d'écrans ;
ii)- sélectionner au moins un écran maître ; et
iii)- déplacer la barre de charge de l'écran maître en fonction de l'ordre reçu.

De façon avantageuse, l'extrémité mobile d'un écran est sa barre de charge.

L'invention sera mieux comprise à la lecture de la description qui va suivre, donnée uniquement à titre d'exemple et faite en se référant aux dessins annexés sur lesquels :
- la figure 1 est une représentation d'un écran susceptible d'être configuré par le procédé selon l'invention,
- les figures 2 à 5 sont des représentations des différentes configurations de déploiement d'écrans d'une installation dont les écrans sont commandés par un procédé selon l'invention ;
- la figure 6 est un ordinogramme du procédé de commande groupée d'un groupe selon l'invention.

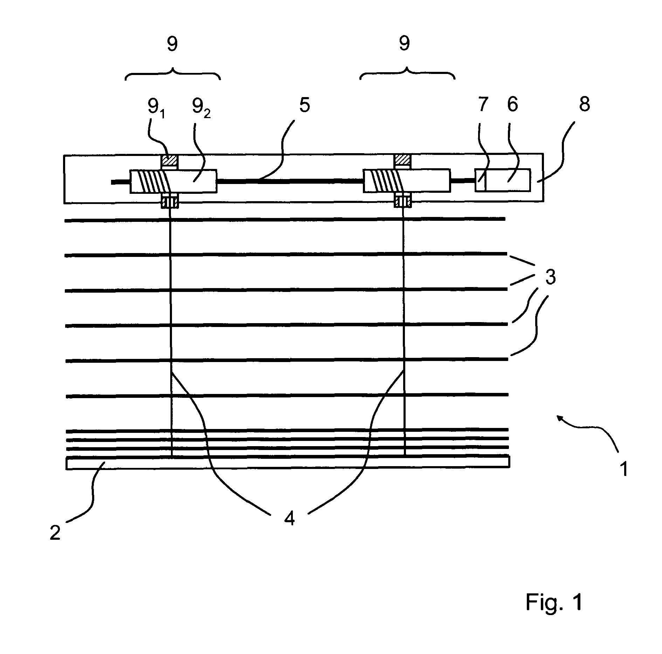

Le procédé de commande selon l'invention est destiné à commander plusieurs écrans équipés d'une barre de charge. Ce type d'écran peut être un store vénitien motorisé comme illustré dans une installation 1 telle que représentée à la figure 1. L'écran comprend une partie mobile comprenant une barre de charge 2 et des lames orientables 3, la partie mobile étant destiné à occulter une ouverture. La barre de charge 2 est reliée à des dispositifs d'enroulement 9 par deux cordons 4. Chaque dispositif d'enroulement 9 comprend un tambour 9₂ autour duquel s'enroule le cordon correspondant 4 et un moyen de guidage 9₁ permettant de guider le cordon vers le tambour. Les deux tambours 9₂ sont reliés entre eux par un arbre 5 entraîné en rotation par un actionneur 6. Cet actionneur comprend un moyen de comptage 7 permettant de calculer la position relative de la barre de charge par rapport à une position de référence prédéterminée, propre ou intrinsèque à l'écran. Ce moyen de comptage peut être un encodeur mesurant le nombre de tours effectués par l'arbre 5 par rapport à la position de référence prédéterminée.

Un moyen non représenté d'orientation des lames peut également être prévu. Il peut être indépendant du dispositif d'enroulement ou y être associé. Généralement, les dispositifs d'enroulement 9 et l'actionneur 6 sont intégralement disposés à l'intérieur d'un caisson 8. Le moyen de comptage 7 peut également être utilisé pour déterminer l'orientation des lames orientables.

D'autres types d'écrans peuvent être utilisés avec le procédé de l'invention tels que des toiles ou lames enroulables. Préférentiellement, chaque écran dispose d'un actionneur et d'un système d'enroulement permettant le déplacement de sa barre de charge à une vitesse sensiblement équivalente à celle des autres barres de charge des écrans du même groupe d'écrans. De plus, le procédé nécessite de pouvoir identifier la position d'une barre de charge d'un écran par rapport à celle d'un autre écran du groupe. Pour cela, il est préférable que chaque moyen de comptage 7 propre à un écran intègre une position de référence commune au groupe. L'état d'ouverture d'un écran par rapport à un autre peut ainsi être défini par rapport à cette position de référence commune.

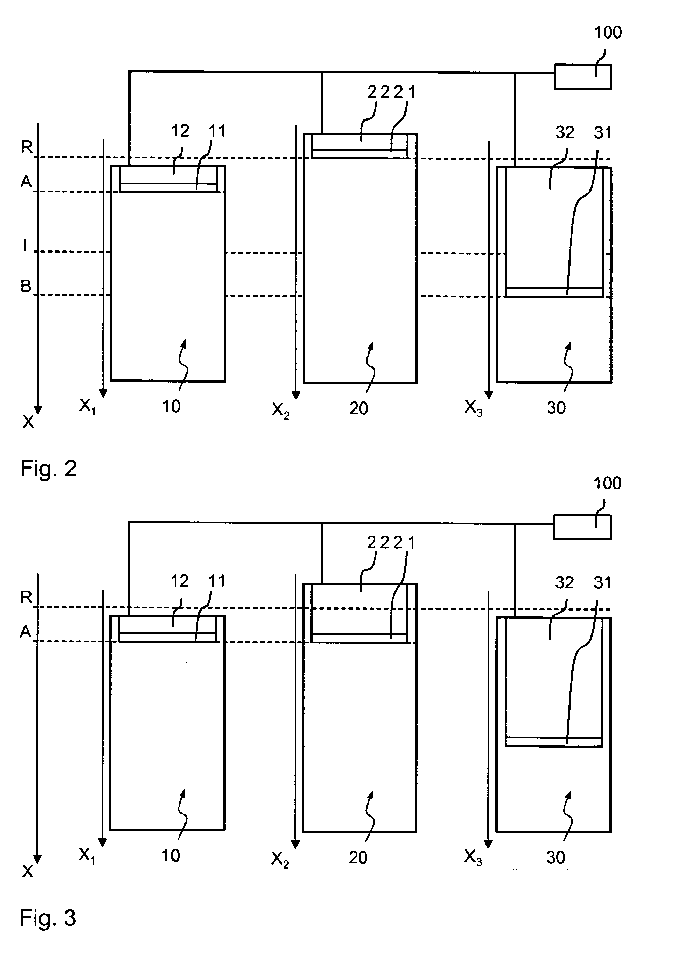

Le procédé de commande selon l'invention est adapté pour une installation telle qu'illustrée sur les figures 2 à 5. Ces figures représentent une installation composée de trois écrans 10, 20 et 30.

Les écrans 10, 20 et 30 comprennent chacun une barre de charge 11, 21 et 31 et une toile ou des rangées de lames 12, 22 et 32. Chaque barre de charge se déplace selon une course délimitée par des fins de course haute et basse. Dans ce qui suit, on considère qu'un écran est commandé « à l'ouverture » lorsque sa barre de charge est déplacée vers le haut, en direction de sa fin de course haute. A contrario, un écran est commandé « à la fermeture » lorsque sa barre de charge est abaissée en direction de sa fin de course basse. De même, les expressions « dans un sens d'ouverture » et « dans un sens de fermeture » correspondent à des mouvements d'une barre de charge d'un écran respectivement vers et à l'opposé de sa fin de course haute.

Les fins de course hautes et basses, réglées par l'utilisateur, sont définies par rapport à une position de référence propre à chaque écran. Une position de référence R, commune aux écrans 10, 20 et 30, est prise en compte afin de juger de l'ouverture d'un écran par rapport aux autres. Préférentiellement, cette position de référence commune R correspond à la fin de course haute de l'écran le plus haut. De même, il est préférable que cette position de référence commune R corresponde à la position de la référence de comptage pour tous les écrans du groupe.

Le pilotage des écrans du groupe doit être centralisé, afin d'obtenir l'effet souhaité. Les écrans gérés par le procédé selon l'invention sont donc commandés par un système dit « intelligent » relié, directement ou non, à chaque écran. Les figures 2 à 5 illustrent schématiquement une unité de commande 100 reliée à chaque actionneur non représenté pilotant un écran du groupe. La liaison peut être filaire, radio ou réalisée par d'autres moyens de communication. De même, l'unité de commande du groupe peut être au niveau d'un des actionneurs du groupe, chaque actionneur pouvant dialoguer avec les autres actionneurs du groupe par une liaison appropriée. L'unité de commande 100 permet également une gestion centralisée des positions des écrans du groupe.

L'unité 100 et ses périphériques, notamment les moyens de comptage 7, constituent un automatisme permettant de mettre en oeuvre les procédés décrites ci-après.

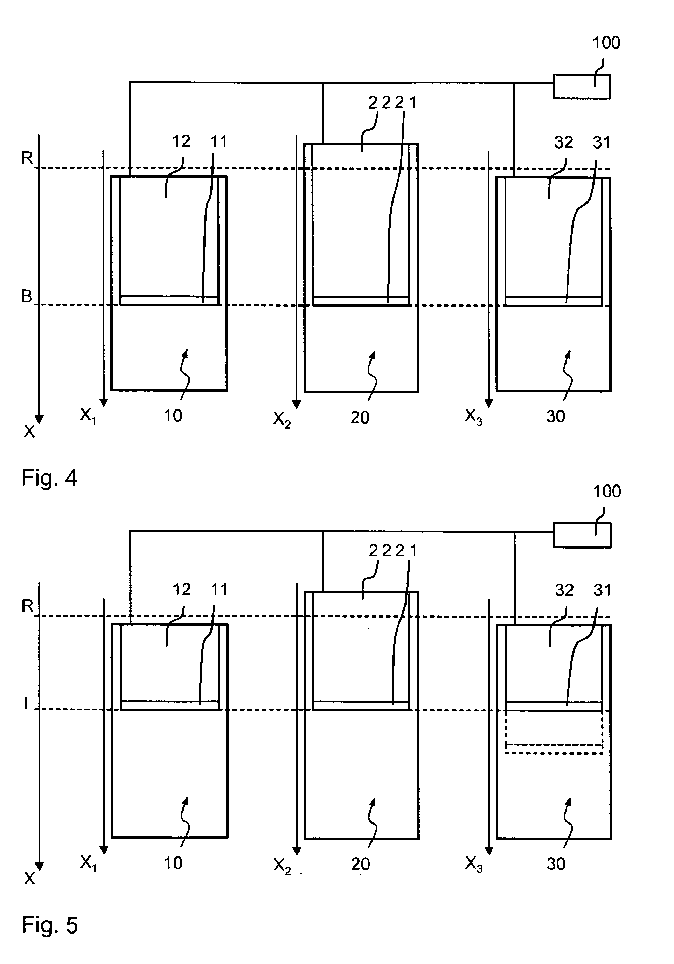

La figure 2 montre une première configuration de l'installation où le déploiement des trois écrans est différent. Lorsqu'un ordre groupé de fermeture est émis, l'écran le plus ouvert est identifié, en l'occurrence l'écran 20 dans cet exemple, et seule sa barre de charge 21 est déplacée dans un sens de fermeture de l'écran 20, c'est-à-dire dans un sens où la barre 21 est abaissée. Dès qu'elle atteint la position A correspondant à la position de la barre de charge 11 d'un autre écran 10, comme illustré à la figure 3, alors le déplacement de la barre de charge 11 dans un sens de fermeture de l'écran 10 est ordonné. Les deux barres de charges 11 et 21 se déplacent alors simultanément et au même niveau. Lorsqu'elles atteignent la position B, position correspondant à la barre de charge 31 de l'écran 30, comme le montre la figure 4, alors la troisième barre de charge 31 est mise en mouvement dans un sens de fermeture de l'écran 30. Les trois barres de charges 11, 21 et 31 poursuivent alors leur mouvement jusqu'à atteindre leurs fins de course basses respectives ou jusqu'à un ordre groupé d'arrêt soit exécuté.

Pour un ordre groupé d'ouverture, le principe est le même, l'écran le plus fermé étant d'abord commandé à l'ouverture.

Lorsque deux ou plusieurs écrans sont sensiblement au même niveau, le déplacement de leurs barres de charge est ordonné simultanément. Par exemple, si l'ordre groupé de fermeture est émis alors que l'installation est dans la configuration de la figure 3, le déplacement des barres de charge 11 et 21 est ordonné simultanément.

Dans le cas où un organe de commande émet un ordre de mouvement vers une position intermédiaire I, telle que représentée à la figure 5, à partir d'une configuration initiale, telle que celle représentée à la figure 1, plusieurs scénarii sont possibles.

Dans un premier scénario, seuls les écrans dont les barres de charge sont situées au-dessus de la position intermédiaire sont commandés dans un sens de fermeture. L'ordre est traité comme un ordre groupé de fermeture pour les écrans 10 et 20, avec la particularité que les deux écrans s'arrêtent lorsque la position intermédiaire I est atteinte. Le déplacement du troisième écran 30 vers la position intermédiaire, dans un sens d'ouverture est ensuite commandé pour passer de la configuration en pointillés à la configuration en traits pleins à la figure 5. A la fin de l'opération, toutes les barres de charge des trois écrans sont alignées au niveau de la position intermédiaire.

Le deuxième scénario est comparable au premier. Seuls les écrans dont les barres de charge sont situées en dessous de la position intermédiaire I sont commandés dans un premier temps, dans un sens de fermeture. Dans notre exemple, uniquement l'écran 30 est commandé, les deux autres écrans ne bougeant pas. Puis les écrans dont les barres de charge sont situées au-dessus de la position intermédiaire I sont déplacés vers la position intermédiaire.

Dans le troisième scénario, dans le cas où des barres de charge sont à la fois au-dessus et en dessous de la position intermédiaire et après la réception de l'ordre, la barre de charge de l'écran le plus ouvert et la barre de charge de l'écran le plus fermé sont déplacées simultanément vers la position intermédiaire. Les barres de charge des autres écrans seront alors déplacées dès qu'une des deux barres de charge a atteint leur niveau. A la fin de l'opération, toutes les barres de charge sont alignées sur la position intermédiaire.

Pour le confort des utilisateurs, il est possible de bloquer le déplacement de certains écrans du groupe. Ainsi, suite à une opération sur le système domotique, comme par exemple l'activation d'un bouton au niveau d'un point de commande local, il est possible d'empêcher tout mouvement de l'écran associé commandé par un ordre de commande groupée. La restriction de mouvement peut aussi dépendre de l'ordre de commande groupée et/ou de la configuration des écrans. Par exemple, un ordre d'aller en position intermédiaire peut commander uniquement le déplacement des écrans situés au-dessus de la position intermédiaire, ceux qui sont en dessous n'étant pas déplacés.

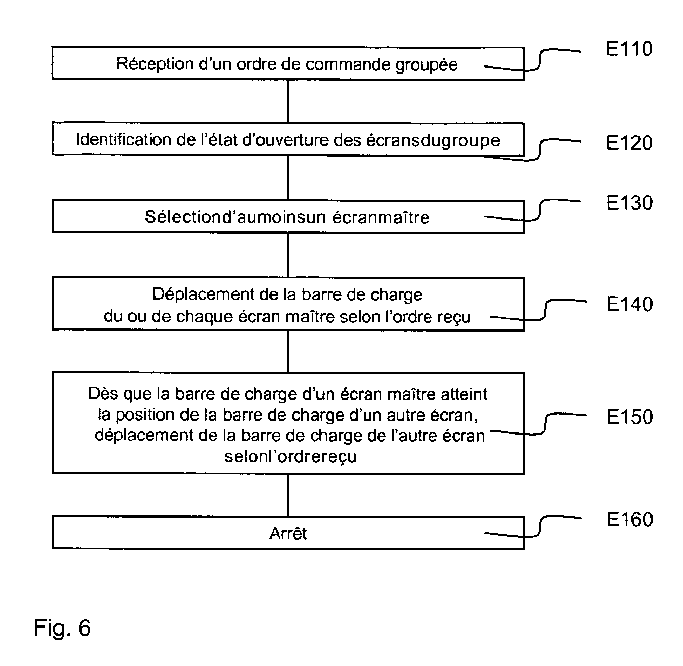

Le procédé proposé permet d'obtenir l'alignement dynamique des barres de charge des écrans d'un groupe suite à un ordre de commande groupée. Un tel procédé de commande groupée assurant cette fonction est illustré à la figure 6 et comprend préférentiellement les étapes suivantes :

Dans une première étape E110, l'ordre de commande groupée est reçu par un récepteur apte à gérer le déplacement des écrans du groupe.

Dans une deuxième étape E120, le récepteur identifie, en fonction des positions recueillies via les moyens de comptage, l'état d'ouverture de chaque écran du groupe d'écrans. Ces différentes positions peuvent être enregistrées au niveau du récepteur. Il est alors possible de déduire quel est l'écran le plus ouvert ou celui le plus fermé par rapport à une position de référence commune R.

Ensuite, en fonction de l'ordre émis, un écran « maître » ou « référant » est sélectionné dans une troisième étape E130. Cet écran maître correspond à l'écran qui sera déplacé en premier. Dans le cas d'un ordre groupé de fermeture, ce sera l'écran le plus ouvert, comme mentionné en référence à l'écran 20 dans l'exemple des figures 2 à 4. Dans le cas d'un ordre groupé d'ouverture, ce sera l'écran le plus fermé. Dans le cas d'un ordre de mouvement vers une position intermédiaire, cela dépendra de la configuration de l'installation au moment de la commande et de la position intermédiaire à atteindre, comme expliqué en référence à la figure 5. L'écran maître peut alors être l'écran le plus ouvert, l'écran le plus fermé ou il peut y avoir deux écrans maîtres l'écran le plus ouvert et l'écran le plus fermé qui seront commandés soit simultanément, soit en décalage.

Dans le cas où un ou plusieurs écrans se situent au même niveau qu'un écran maître, ceux-ci sont également considérés comme écrans maîtres. Dans ce cas, un seul écran référant peut être désigné afin de servir de référence pour le pilotage du groupe. En règle générale, l'écran maître est celui dont la barre de charge est la plus éloignée de la positon commune recherchée pour les différentes barres de charge des écrans du groupe, à la fin de leurs déplacements respectifs.

Dans une quatrième étape E140, seul le déplacement de la barre de charge de l'écran maître ou des écrans maîtres est ordonné. Le déplacement dépend de l'ordre émis : ouverture ou fermeture du ou des écrans. On note que plusieurs barres de charge peuvent être déplacées à cette étape. Certains déplacements peuvent également être selon des directions opposées, dans le cas ou les écrans maîtres convergent vers une position intermédiaire.

Dans une cinquième étape E150, le déplacement des barres de charge des autres écrans du groupe est ordonné dès que la barre de charge d'un écran maître ou référant atteint leur position. Cette étape peut être réalisée en ne surveillant que les positions successives de la barre de charge du ou des écrans maîtres. Ainsi, dès que la barre de charge d'un écran maître atteint la position d'une barre de charge d'un autre écran enregistrée à l'étape E120, un ordre de mouvement est ordonné à cet autre écran.

En d'autres termes, lors de l'étape E150, chaque écran est activé, selon l'ordre de commande groupé reçu à l'étape E110, dès que sa barre de charge devient la plus éloignée de la position commune recherchée pour les barres de charge, puisque la barre de charge de l'écran maître est parvenue à son niveau. A l'instant où la barre de charge de l'écran maître, et éventuellement celles des autres écrans en mouvement, parvient au niveau de la barre charge d'un écran à l'arrêt, les barres de charge de cet écran à l'arrêt et de l'écran maître sont simultanément les plus éloignées de la position commune recherchée, qu'il s'agisse d'une position de fermeture ou d'ouverture totale ou d'une position intermédiaire I, telle que celle représentée à la figure 5.

Le déplacement des barres de charge est arrêté dans une sixième étape E160, lorsqu'un ordre groupé d'arrêt est émis, ou lorsqu'une fin de course ou la position intermédiaire recherchée est atteinte.

Le procédé est aussi utilisable pour des écrans à translation horizontale ou pour des écrans orientables tels que des brise-soleil ou louvres orientables à axe horizontal ou vertical. Dans ce cas, l'effet recherché est un confort visuel obtenu par le caractère homogène des protections solaires agissant sur l'espace intérieur du bâtiment.

Dans le cas des écrans à translation horizontale, un déplacement dans un sens de fermeture ou « à la fermeture » correspond à un mouvement de déploiement d'un écran de manière à obturer l'ouverture associée à l'écran. A l'inverse, un déplacement dans un sens d'ouverture ou « à l'ouverture » correspond à un mouvement de repli de l'écran afin de dégager l'ouverture.

Pour les écrans orientables, un déplacement dans un sens de fermeture correspond à une orientation des lames de manière à diminuer la lumière passant à travers les lames. D'autre part, un déplacement dans un sens d'ouverture correspond à une orientation des lames permettant de laisser passer plus de lumière à travers les lames.

Par ailleurs, l'installation peut comprendre un système permettant de compenser les variations de vitesse entre les différents écrans. Avec un tel système, il est possible d'obtenir un alignement dynamique des extrémités mobiles même lorsque les écrans du groupe n'ont pas la même vitesse de manoeuvre, comme ce peut être le cas si les diamètres d'enroulement des écrans sont différents. En régulant la vitesse propre à un écran, il est également possible de maintenir l'alignement des barres de charge pendant la manoeuvre ordonnée.

Le procédé selon l'invention peut également prévoir, lors d'un ordre groupé, l'alignement des barres de charge sur une position prédéfinie avant le déplacement des barres de charge vers la position finale souhaitée. Ce mode de réalisation est plus particulièrement pertinent lorsque les écrans ne sont pas initialement au même niveau, comme aux figures 2 ou 3. Ce mode de pilotage peut être illustré comme suit : Partant d'une configuration des écrans de la figure 2, un ordre groupé de fermeture est émis. Le déplacement des barres de charge vers la position intermédiaire I de la figure 5 est alors ordonné. Les barres 11 et 21 descendent alors que la barre de charge 31 remonte jusqu'à la position I. Ensuite, toutes les barres de charges descendent ensemble, alignées jusqu'à la fermeture de tous les écrans. Ce mode de pilotage est également applicable pour un ordre groupé d'ouverture ou un ordre de mouvement vers une position intermédiaire. La position prédéfinie est préférentiellement une position dépendant de la position des écrans du groupe. Avantageusement, cette position est la moyenne entre la position de l'écran le plus ouvert et la position de l'écran le plus fermé.

## Revendications

1. Procédé de commande groupé du déplacement vers une position commune (I) des extrémités mobiles (11, 21, 31) des écrans (10, 20, 30) d'un groupe d'écrans motorisés, **caractérisé en ce qu'**il comprend une étape (E150) consistant à déplacer l'extrémité (11, 21, 31) d'un écran (10, 20, 30) dès que cette extrémité devient la plus éloignée de la position commune (I), suite au déplacement de l'extrémité (21) d'au moins un autre écran (20) en direction de la position commune.

2. Procédé de commande groupée selon la revendication 1 **caractérisé en ce que** lorsque l'extrémité mobile (11) d'un écran (10) s'aligne avec celle d'un ou plusieurs autres écrans (20) du groupe, tous ces écrans (10, 20) sont déplacés simultanément.

3. Procédé de commande groupée selon l'une des revendications précédentes **caractérisé en ce qu'**il comprend, suite à une commande groupée d'ouverture, une étape (E140) précédant celle de la revendication 1 et consistant à déplacer dans un sens d'ouverture l'extrémité mobile (21) de l'écran le plus fermé (20).

4. Procédé de commande groupée selon l'une des revendications 1 ou 2 **caractérisé en ce qu'**il comprend, suite à une commande groupée de fermeture, une étape (E140) précédant celle de la revendication 1 et consistant à déplacer, dans un sens de fermeture, l'extrémité mobile de l'écran le plus ouvert.

5. Procédé de commande groupée selon l'une des revendications précédentes **caractérisé en ce que** le déplacement des extrémités mobiles (11, 21, 31) des écrans (10, 20, 30) dépend de leur position initiale par rapport à la position commune (I).

6. Procédé de commande groupée selon l'une des revendications précédentes, **caractérisé en ce qu'**il comprend des étapes préalables à celle de la revendication 1 et consistant à :
i)- identifier (E120) l'état d'ouverture des écrans (10, 20, 30) du groupe d'écrans ;
ii)- sélectionner (E130) au moins un écran maître (20) ; et
iii)- déplacer (E140) la barre de charge (21) de l'écran maître selon l'ordre reçu.

7. Procédé de commande groupée selon l'une des revendications précédentes **caractérisé en ce que** l'extrémité mobile d'un écran (10, 20, 30) est sa barre de charge (11, 21, 31).

## Claims

1. A group control method for causing the moving ends (11, 21, 31) of the screens (10, 20, 30) of a group of motor-driven screens to move towards a common position (I), said group control method being **characterized in that** it includes a step (E150) consisting in moving the end (11, 21, 31) of a screen (10, 20, 30) as soon as said end becomes the end that is furthest from the common position (I), as a result of the end (21) of at least one other screen (20) being moved towards the common position.

2. A group control method according to claim 1, **characterized in that** once the moving end (11) of a screen (10) comes into alignment with the moving end of one or more other screens (20) in the group, all of these screens (10, 20) are moved simultaneously.

3. A group control method according to any preceding claim, **characterized in that**, following an open group command, it includes a step (E140) preceding the step of claim 1 and consisting in causing the moving end (21) of the screen (20) that is furthest closed to be moved in an opening direction.

4. A group control method according to claim 1 or claim 2, **characterized in that**, following a close group command, it includes a step (E140) preceding the step of claim 1 and consisting in causing the moving end of the screen that is furthest open to move in a closure direction.

5. A group control method according to any preceding claim, **characterized in that** the movement of the moving ends (11, 21, 31) of the screens (10, 20, 30) depends on their initial positions relative to the common position (I).

6. A group control method according to any preceding claim, **characterized in that** it includes steps prior to the step of claim 1, and consisting in:
i) identifying (E120) the state of opening of the screens (10, 20, 30) of the group of screens;
ii) selecting (E130) at least one master screen (20); and
iii) moving (E140) the load bar (21) of the master screen in compliance with the received instruction.

7. A group control method according to any preceding claim, **characterized in that** the moving end of a screen (10, 20, 30) is its load bar (11, 21, 31).

## Patentansprüche

1. Verfahren zur gruppenweisen Steuerung des Verstellens der beweglichen Enden (11, 21, 31) von Schirmen (10, 20, 30) einer Gruppe motorisierter Schirme in Richtung einer gemeinsamen Stellung (I), **gekennzeichnet durch** einen Schritt (E150), der darin besteht, im Anschluss an die Verstellung des Endes (21) mindestens eines anderen Schirmes (20) in die Richtung einer gemeinsamen Stellung das Ende (11, 21, 31) eines Schirms (10, 20, 30) zu verstellen, wenn dieses Ende das am weitesten von der gemeinsamen Stellung (I) entfernt wird.

2. Verfahren zur gruppenweisen Steuerung nach Anspruch 1, **dadurch gekennzeichnet, dass** bei Fluchten des beweglichen Endes (11) eines Schirmes (10) mit demjenigen von einem oder mehreren anderen Schirmen (20) der Gruppe alle Schirme (10, 20) gleichzeitig verstellt werden.

3. Verfahren zur gruppenweisen Steuerung nach einem der vorhergehenden Ansprüche, **gekennzeichnet durch** einen Schritt (E140), der im Anschluss an eine gruppenweisen Steuerung zur Öffnung demjenigen von Anspruch 1 vorausgehend darin besteht, bewegliche Ende (21) des am meisten geschlossenen Schirms (20) in eine Öffnungsrichtung zu bewegen.

4. Verfahren zur gruppenweisen Steuerung nach einem der vorhergehenden Ansprüche, **gekennzeichnet durch** einen Schritt (E140), der im Anschluss an eine gruppenweisen Steuerung zur Schließung demjenigen von Anspruch 1 vorausgehend darin besteht, das bewegliche Ende (21) des am meisten geöffneten Schirms (20) in eine Schließrichtung zu bewegen.

5. Verfahren zur gruppenweisen Steuerung nach einem der vorhergehenden Ansprüche, **dadurch gekennzeichnet, dass** die Verstellung der beweglichen Enden (11, 21, 31) der Schirme (10, 20, 30) von ihrer Ausgangsstellung in Bezug auf die gemeinsame Stellung (I) abhängt.

6. Verfahren zur gruppenweisen Steuerung nach einem der vorhergehenden Ansprüche, **kennzeichnet durch** Schritte, die denjenigen von Anspruch 1 vorausgehend in Folgendem bestehen:
i) Feststellen (E120) des Öffnungszustands der Schirme (10, 20, 30) der Schirmgruppe;
ii) Auswählen (E130) von mindestens einem Hauptschirm (20); und
iii) Verstellen (E140) des Ausfallprofils (21) des Hauptschirms gemäß dem empfangenen Befehl.

7. Verfahren zur gruppenweisen Steuerung nach einem der vorhergehenden Ansprüche, **dadurch gekennzeichnet, dass** das bewegliche Ende eines Schirms (10, 20, 30) sein Ausfallprofil (11, 21, 31) ist.
